# EUROPEAN PATENT APPLICATION

(11) **EP 3 236 554 A1**
(43) Date of publication of application: **25.10.2017**
(21) Application number: 15869909.0
(22) Date of filing: 11.12.2015
(51) Int. Cl.: H02J 3/00, G06Q 50/06, H02J 3/14

(54) **DEMAND POWER PREDICTION DEVICE, DEMAND POWER PREDICTION METHOD, AND PROGRAM**

(30) Priority: 16.12.2014 JP 2014254087
(71) Applicant: Sekisui Chemical Co., Ltd., Osaka-shi, Osaka 530-8565 (JP)
(72) Inventor: UENISHI Akihiro, Tsukuba-shi Ibaraki 300-4292 (JP); SUGAHARA Yasuhiro, Tsukuba-shi Ibaraki 300-4292 (JP); MATSUZAKI Junichi, Tsukuba-shi Ibaraki 300-4292 (JP); UMEOKA Takashi, Tsukuba-shi Ibaraki 300-4292 (JP)
(74) Representative: Müller-Boré & Partner Patentanwälte PartG mbB
(86) International application number: PCT/JP2015/084812
(87) International publication number: WO 2016/098704

(57) **Abstract**

A power demand estimation apparatus, comprising: an error measuring unit configured to measure an error of estimated power demand estimated with respect to one or more customer facilities; an error addition unit configured to obtain an added error obtained by adding errors measured with respect to segment periods in a unit term for correction, the unit term for correction including a predetermined number of consecutive series of segment periods; and a power demand estimation unit configured to estimate power demand values with respect to the respective segment periods, and correct the estimated power demand value estimated with respect to last predetermined number of segment period in the unit term for correction, based on an added error obtained with respect to the segment periods preceding the last predetermined number of segment period in the unit term for correction.

## Description

### TECHNICAL FIELD

The present invention relates to a power demand estimation apparatus, a power demand estimation method and a program.

Priority is claimed on Japanese Patent Application No. 2014-254087, filed December 16, 2014, the contents of which are incorporated herein by reference.

### DESCRIPTION OF RELATED ART

For example, from the viewpoint of a contract with a power company and environmental consideration, the power control for suppressing power consumption or the like in a facility of a customer may be required in some cases. Further, in recent years, there are growing number of customer facilities that have power generation devices using renewable energy (natural energy) such as a photovoltaic module. In such a facility environment equipped with a power generation device that can utilize renewable energy, a stable supply of electric power is demanded.

For meeting such demand, it is known to take countermeasures such as reduction of power used in household electrical appliances as loads in facilities, time-shift use of power, etc. (see, for example, Patent Documents 1 and 2).

Currently, it is effective in terms of reliability and the like to perform power control according to excess or shortage of power, for example, by using a storage battery. For facilities equipped with storage batteries, it is required to utilize the storage batteries as effectively as possible.

For this purpose, a power management technique is known in which a storage battery is charged and discharged according to a time table generated based on a time period during which a peak power is observed (see, for example, Patent Document 3).

There is also known a technique in which the power control is performed such that a storage battery is charged and discharged in consideration of the efficiency of an inverter that performs a power conversion for a plurality of the storage batteries provided in the area (see, for example, Patent Document 4).

The power control as described above in some cases use an estimated value of power demand after the current time or the like. In this case, a smaller error between the estimated value and the actual value can enable the power to be used more efficiently.

### DOCUMENTS OF RELATED ART

### [Patent Document]

Patent Document 1: Japanese Unexamined Patent Application Publication No. 2006-74952
Patent Document 2: Japanese Unexamined Patent Application Publication No. Hei 11-346437
Patent Document 3: Japanese Unexamined Patent Application Publication No. 2014-168315
Patent Document 4: Japanese Unexamined Patent Application Publication No. 2014-30334
Patent Document 5: Japanese Patent No. 5579954
Patent Document 6 : International Patent Application Publication No. 2011/122672

### DISCLOSURE OF INVENTION

### Problems to be Solved by the Invention

Therefore, for example, a power management system adapted to a customer facility is required to perform sequential control so as to minimize the error of estimated value of power demand against the actual performance value. In this case, for example, if the power control is performed so as to correct the error of estimation of the power demand in real time, the power fluctuation can also be controlled to stay constantly at a low level.

However, for example, assuming a case where a customer has made a demand contract, it is enough to suppress the power fluctuation in a demand time period of 30 minutes to fall within a specific range, whereas a real-time correction of the error of estimated power demand is not necessarily required. The real-time correction of error of the estimated power demand even in such a case may cause problems such as unnecessarily increased processing load in the power management.

The present invention has been made in view of these circumstances, and the object of the present invention is to enable the intermittently estimated power demand to be appropriately corrected.

### Means to Solve the Problems

For solving the aforementioned problems, the present invention in one embodiment provides a power demand estimation apparatus, comprising: an error measuring unit configured to measure an error of estimated power demand estimated with respect to one or more customer facilities; an error addition unit configured to obtain an added error by adding errors measured with respect to segment periods in a unit term for correction, the unit term for correction including a predetermined number of consecutive segment periods; and a power demand estimation unit configured to estimate power demand values with respect to the respective segment periods, and correct the estimated power demand value estimated with respect to last predetermined number of the segment period in the unit term for correction, based on an added error obtained with respect to the segment periods preceding the last predetermined number of the segment period in the unit term for correction.

In the power demand estimation apparatus according to one embodiment of the present embodiment, the error addition unit may obtain the addition error as an integrated error by integrating the errors measured with respect to the respective segment periods.

In the power demand estimation apparatus according to one embodiment of the present embodiment, the power demand estimation unit may correct the estimated power demand value of last one segment period in the unit term for correction, based on an added error obtained with respect to the segment periods preceding the last one segment period in the unit term for correction.

In the power demand estimation apparatus according to one embodiment of the present embodiment, the power demand estimation unit may correct the estimated power demand values of last two or more segment periods in the unit term for correction, based on an added error obtained with respect to the segment periods preceding the last two or more segment periods in the unit term for correction.

The present invention in one embodiment provides a power demand estimation method, comprising: an error measuring step of measuring an error of estimated power demand estimated with respect to one or more customer facilities; an error addition step of obtaining an added error obtained by adding errors measured with respect to segment periods in a unit term for correction, the unit term for correction including a predetermined number of consecutive series of segment periods; and a power demand estimation step of estimating power demand values with respect to the respective segment periods, and correcting the estimated power demand value estimated with respect to last predetermined number of the segment period in the unit term for correction, based on an added error obtained with respect to the segment periods preceding the last predetermined number of the segment period in the unit term for correction.

In the error addition step of the power demand estimation method according one embodiment of the present invention, the added error may be obtained as an integrated error by integrating the errors measured with respect to the respective segment periods.

The present invention in one embodiment provides a power demand estimation program for causing a computer to execute: an error measuring step of measuring an error of estimated power demand estimated with respect to one or more customer facilities; an error addition step of obtaining an added error obtained by adding errors measured with respect to segment periods in a unit term for correction, the unit term for correction including a predetermined number of consecutive series of segment periods; and a power demand estimation step of estimating power demand values with respect to the respective segment periods, and correcting the estimated power demand value estimated with respect to last predetermined number of the segment period in the unit term for correction, based on an added error obtained with respect to the segment periods preceding the last predetermined number of the segment period in the unit term for correction.

The present invention in one embodiment provides the aforementioned computer, which, in the error addition step, may obtain the added error as an integrated error by integrating the errors measured with respect to the respective segment periods.

### EFFECT OF THE INVENTION

As described above, the present invention can achieve an effect that the intermittently estimated power demand to be appropriately corrected.

### BRIEF DESCRIPTION OF THE DRAWINGS

FIG. 1 is a diagram showing an example of configuration of a power management system on the whole according to the first embodiment of the present invention.
FIG. 2 is a diagram showing an example of electrical equipment possessed by a customer facility in the first embodiment of the present invention.
FIG. 3 is a diagram showing an example of configuration of a power management apparatus in the first embodiment of the present invention.
FIG. 4 is a diagram for explaining an example of outline of operation of a power management apparatus in the first embodiment of the present invention for acquiring an estimated total power demand and correcting the estimated total power demand.
FIG. 5 is a diagram showing an example of fluctuation of power consumption according to the lapse of time at a certain customer facility in one day (24 hours).
FIG. 6 is a diagram showing errors between estimated power demand values and actual power demand values in one customer facility, which are measured per minute for one day (24 hours).
FIG. 7 is a diagram showing the errors shown in FIG. 6 as a histogram.
FIG. 8 is a diagram showing values obtained by integrating the errors observed per minute shown in FIG. 6 with respect each 30-minute section.
FIG. 9 is a diagram showing values (integrated errors) obtained by integrating the errors observed per minute shown in FIG. 6 over 29 minutes that correspond to the 1 st to 29th section periods.
FIG. 10 is a graph showing values (integrated errors) obtained by integrating errors observed per 30 minutes as a unit term for correction in the case where the estimated power demand in the 30th segment period is corrected based on the integrated error value shown in FIG. 9 that is obtained by integrating the errors observed per minute over 29 minutes.
FIG. 11 is a diagram showing the integrated errors shown in FIG. 8 as a histogram.
FIG. 12 is a diagram showing the integrated errors shown in FIG. 10 as a histogram.
Fig. 13 is a flowchart showing an example of procedures implemented by the power management apparatus according to the first embodiment of the present invention.
FIG. 14 is a diagram for explaining an example of outline of operation of a power management apparatus in the second embodiment of the present invention for acquiring an estimated total power demand and correcting the estimated total power demand.
Fig. 15 is a flowchart showing an example of procedures implemented by the power management apparatus according to the second embodiment of the present invention.
FIG. 16 is a diagram showing an example of configuration of a modified version of the power management system on the whole.

### BEST MODE FOR CARRYING OUT THE INVENTION

### <First embodiment>

### [Configuration of Power Management System on the Whole]

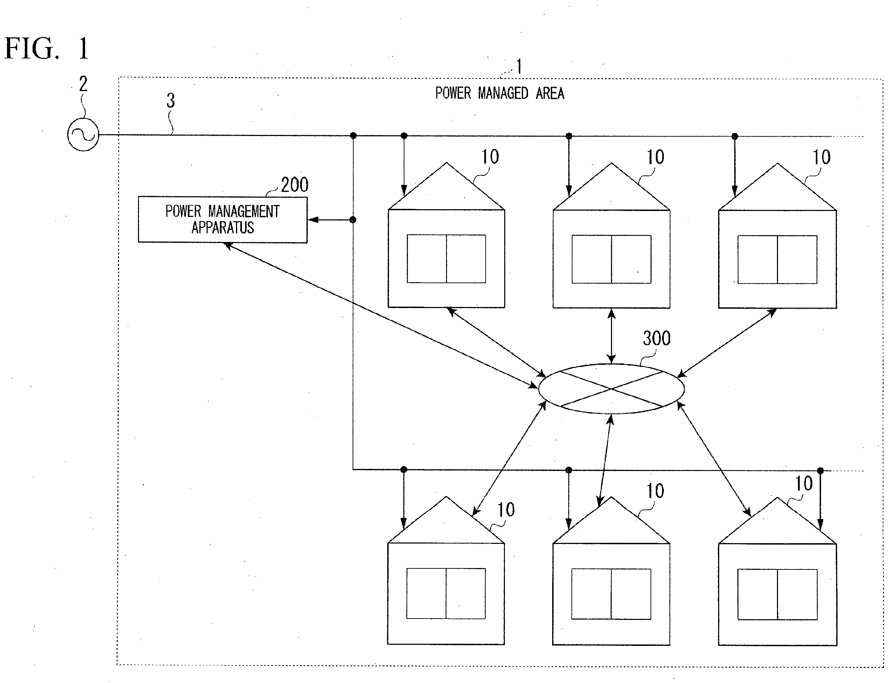

FIG. 1 shows an example of configuration of a power management system on the whole according to the present embodiment of the present invention. The power management system of this embodiment collectively manages the power in a plurality of customer facilities such as residential houses, commercial facilities and industrial facilities, which are located in a specific area. Such a power management system corresponds to what is referred to as TEMS (Town Energy Management System) or CEMS (Community Energy Management System).

The power management system of this embodiment performs power management with respect to electrical equipment provided in each of the plurality of customer facilities 10 in a specific area denoted as power managed area 1 in FIG. 1.

The customer facility 10 is, for example, any of residential houses, commercial facilities, and industrial facilities. In addition, the power managed area 1 in one embodiment may, for example, correspond to one or more housing complexes where each of the customers facilities 10 is a residential house in the housing complexes.

The customer facilities 10 in the power managed area 1 shown in FIG. 1 include a customer facility 10 equipped with a photovoltaic module which is a power generator for generating electric power by using renewable energy. Further, the customer facilities 10 in the power managed area 1 include a customer facility 10 equipped with a storage battery as electrical equipment.

Such customer facilities 10 may include a customer facility 10 having both of the photovoltaic module and the storage battery, or a customer facility 10 having one of the photovoltaic module and the storage battery.

To the customer facilities 10 in the power managed area 1 when connected to the common system power supply 3, the powers branched off from the commercial power source 2 are supplied. Each of the customer facilities 10 can supply the power supplied from the system power supply 3 to the load. As a result, various electrical equipment (device) as a load can be operated.

Moreover, a customer facility 10 having a photovoltaic module can output the power generated by the photovoltaic module to the system power supply 3.

Further, a customer facility 10 having a storage battery can charge the power supplied from the system power supply 3 to the storage battery. Moreover, a customer facility 10 having a photovoltaic module and a storage battery can charge the storage battery with the power generated by the photovoltaic module.

The customer facilities need not be limited to those located and similarly managed in the same area as long as the customer facilities are managed by the power management system. That is, the power management system may cover an assembly of a plurality of customer facilities registered in different areas (e.g., various areas such as Hokkaido, Honshu, Kyushu and Shikoku) as long as such customer facilities are registered as customer facilities under the control of the power management system, and are capable of transmission and receipt of information to be managed via a network 300. In this case, the common system power supply 3 is an assembly of the power supply lines in the areas which are connected to the customer facilities 10 respectively.

Further, the power management system of the present embodiment is equipped with a power management apparatus 200 (one examples of the power demand estimation apparatus). The power management apparatus 200 performs power control with respect to electrical equipment provided in each of the plurality of customer facilities 10 belonging to the power managed area 1. Thus, the power management apparatus 200 in FIG. 1 is connected to the customer facilities 10 in mutually communicable manner via the network 300. Due to this feature, the power management apparatus 200 can control the electrical equipment provided in each of the plurality of customer facilities 10.

### [Example of Electrical Equipment Provided in Customer Facility]

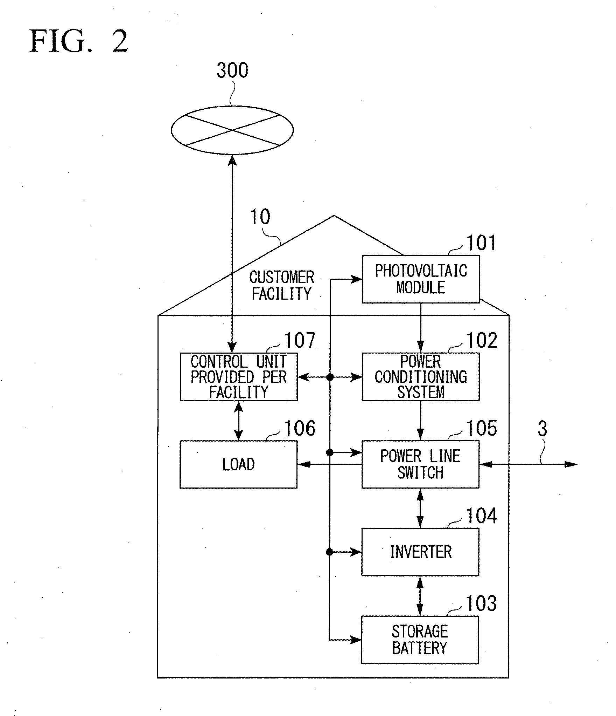

Next, explanations are made on an example of electrical equipment provided in one customer fancily 10, referring to FIG. 2.

In this FIG. 2, the customer facility 10 has, as electrical equipment, a photovoltaic module 101, a power conditioning system 102, a storage battery 103, an inverter 104, a power line switch 105, a load 106, and a control unit 107 provided per facility.

The photovoltaic module 101 is one of the power generators utilizing renewable energy, and generates power by converting light energy into electric power by the photovoltaic effect. The photovoltaic module 101 is provided at a place which can efficiently receive sunlight, such as a roof of the facility 10, and converts the sunlight into electric power.

The power conditioning system 102 is provided in association with the photovoltaic module 101, and converts a direct current power output from the photovoltaic module 101 into alternating current.

The storage battery 103 stores electric power input by charging and output stored electric power by discharging. As the storage battery 103, for example, a lithium ion battery can be used.

The inverter 104 is provided in association with each of the storage batteries 103,and converts electricity charged to the storage battery 103 from alternating current to direct current or converts electricity discharged from the storage battery 103 from direct current to alternating current. That is, the inverter 104 performs bidirectional conversion of electricity input to or output from the storage battery 103.

Specifically, when the storage battery 103 is charged, an alternating current power for charging is supplied to the inverter 104 from the commercial power supply 2 or the power conditioning system 102 via a power line switch 105. The inverter 104 converts the alternating current power thus supplied to a direct current power, and supplies the power to the storage battery 103.

Further, when the storage battery discharges, a direct current power is output from the storage battery 103. The inverter 104 converts the direct current power thus output from the storage battery 103 to an alternating current power, and supplies the power to the power line switch 105.

The power line switch 105 switches the power path in response to the control by the control unit 107 provided per facility. Here, the control unit 107 provided per facility can control the power line switch 105 in response to an instruction given by the power management apparatus 200.

Due to the aforementioned control, the power line switch 105 can form a power path such that a power from the commercial power supply 2 is supplied to the load 106 in the same customer facility 10.

The power line switch 105 can also form a power path such that a power generated by the photovoltaic module 101 is supplied through the power conditioning system 102 to the load 106 in the customer facility 10.

The power line switch 105 can also form a power path such that a power supplied from one or both of the commercial power supply 2 and the photovoltaic module 101 is charged to the storage battery 103 through the inverter 104 in the customer facility 10.

The power line switch 105 can also form a power path such that a power output from the storage battery 103 by discharging is supplied through the inverter 104 to the load 106 in the same customer facility 10.

Further, the power line switch 105 can also form a power path such that a power generated by the photovoltaic module 101 is supplied through the power system of the commercial power supply 2 to the storage battery of another customer facility 10. Furthermore, the power line switch 105 can also form a power path such that a power output from the storage battery 103 by discharging is supplied to the load 106 in another customer facility 10.

The load 106 comprehensively indicates devices, equipment etc. which consume electric power for their own operation in the customer facility 10.

The control unit 107 provided per facility controls electric equipment (all or some of the photovoltaic module 101, the power conditioning system 102, the storage battery 103, the inverter 104, the power line switch 105 and the load 106) in the customer facility 10.

The power management apparatus 200 shown in FIG. 1 above, performs power control with respect to the electrical equipment provided in the entire customer facilities 10 belonging to the power managed area 1. For this purpose, the power management apparatus 200 is connected to each of the control units 107 provided in the respective customer facilities 10 in mutually communicable manner via the network 300. Due to this feature, the control unit 107 provided per facility can control the electrical equipment provided in each of the plurality of customer facilities 10 under its own control in response to the control by the power management apparatus 200.

Alternatively, the control unit 107 provided per facility may be omitted and the power management apparatus 200 may directly control the electrical equipment, such as the storage battery 103, provided in each of the plurality of customer facilities 10. However, with the configuration including the power management apparatus 200 and the control unit 107 provided per facility as in the present embodiment, the control of the power management apparatus 200 can be prevented from becoming complex by stratifying the targets of control into different levels, i.e., the power managed area 1 on the whole and the consumer facilities 10.

Further, as described above, some of the customer facilities 10 in the power managed area 1 may not be equipped with the photovoltaic module 101, the storage battery 103, the inverter 104, etc.

The power management apparatus 200 of the present embodiment as described above estimates the total power demand obtained by adding up the power demand values of the customer facilities 10 in the power managed area 1 by a predetermined estimation algorithm. Hereinbelow, the total power demand thus estimated is referred to as "estimated total power demand" (an example of the estimated power demand).

Although the algorithm for acquiring the estimated total power demand is not particularly limited, the power management apparatus 200 may obtain the estimated total power demand by an estimation algorithm based on, for example, the total power demand for a certain period in the past or the actual values of the power demand at the customer facilities 10.

As the simplest example, the estimated power demand can be obtained as a moving average of total power demand values over a certain period in the past. Further, the power management apparatus 200 can obtain the estimated total power demand with an estimation algorithm using, for example, an AR model (autoregression model) or the like.

Then, the power management apparatus 200 performs control (charging/discharging control) related to charging and discharging of the storage battery 103 of each customer facility 10 in the power managed area 1 based on the estimated total power demand.

Here, when the charging/discharging control of the storage battery 103 is performed with an error being present between the estimated total power demand and the actual value of the total power demand, there is also an error occurring in surplus or shortage of power relative to the power demand. When the charging/discharging control of the storage battery 103 is performed with a large error occurring in the surplus or shortage of power as described above, the power supply from the system power supply 3 may exceed the acceptable limit, or the discharge current from the storage battery 103 may fall short of the demanded power. Alternatively, there may be a case where the storage battery 103 cannot be sufficiently charged with surplus power even when there is sufficient surplus power. For example, this may result in an increase in the electricity charge or may hinder the normal operation of the electric equipment in the power managed area 1.

Therefore, the power management apparatus 200 of the present embodiment is configured to perform charging/discharging control of the storage battery 103 while appropriately correcting the estimated total power demand.

### [Example of Configuration of Power Management Apparatus]

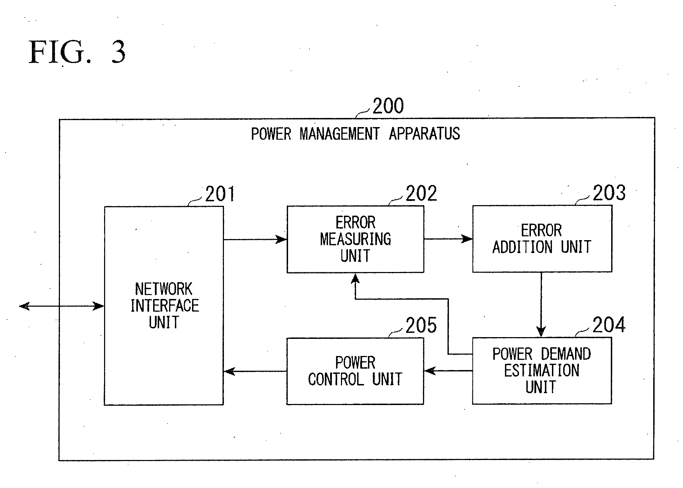

Next, explanations are made on an example of configuration of a power management apparatus 200, referring to FIG. 3. The power management apparatus 200 has a network interface unit 201, an error measuring unit 202, an error addition unit 203, a power demand estimation unit 204 and a power control unit 205.

The network interface unit 201 communicates with the control unit 107 provided per customer facility 10 via the network 300.

The error measuring unit 202 measures an error of estimated total power demand. The estimated total power demand is obtained by the power demand estimation unit 204 to be described later. Further, the error is obtained based on a difference between the estimated total power demand and the actual value of the total power demand at a present time. The actual value of the total power demand at a present time is obtained by the error measuring unit 202 which adds up the power demand values at the customer facilities 10 obtained via communication with the control units 107 respectively provided in the customer facilities 10.

The error addition unit 203 obtains an added error obtained by adding errors measured with respect to segment periods in the unit term for correction, which includes a predetermined number of consecutive series of segment periods. In the present embodiment, the error adding unit 203 obtains the addition error as an integrated error obtained by integrating the errors measured with respect to the respective segment periods.

The power demand estimation unit 204 obtains the estimated total power demand with respect to each of the segment periods. Further, the power demand estimation unit 204 corrects the estimated power demand estimated with respect to last predetermined number of segment period in the unit term for correction, based on an integrated error (added error) obtained with respect to the segment periods preceding the last predetermined number of segment period in the unit term for correction.

The power control unit 205 controls the charging or discharging of the storage battery 103 provided in the customer facility 10 based on the estimated total power demand.

### [Example of Outline of Operation of Power Management Apparatus]

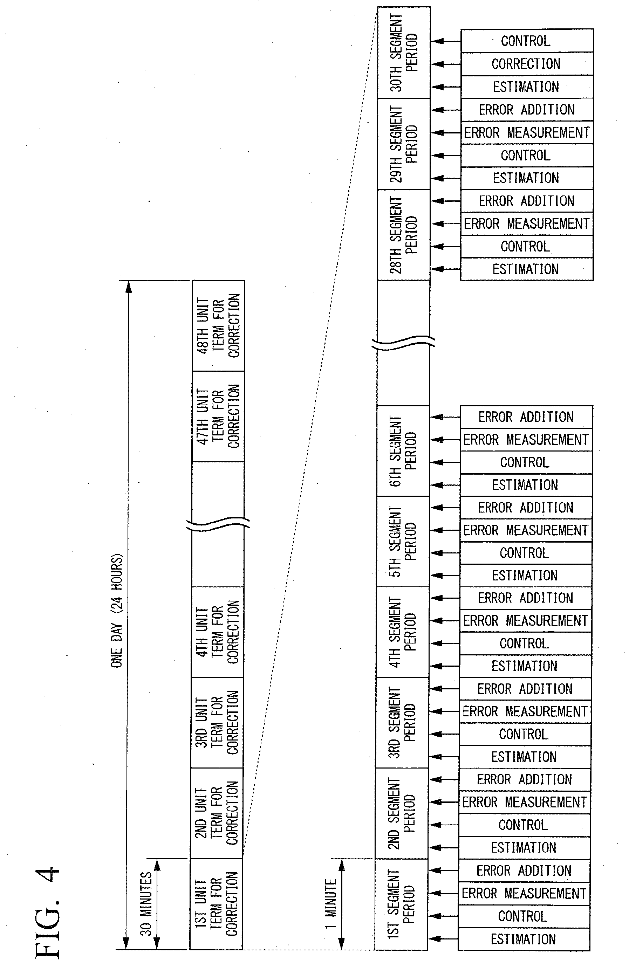

Next, referring to FIG. 4, explanations are made on an example of outline of operation of a power management apparatus 200 in the present embodiment for acquiring an estimated total power demand and correcting the estimated total power demand.

In FIG. 4, firstly, one day (24 hours) is divided into 48 unit terms for correction including the 1 st unit term for correction to the 48th unit term for correction, each lasting for 30 minutes. Each unit term for correction is a term corresponding to each timing at which the correction is performed for suppressing an error between the estimated total power demand and the actual value of the total power demand. That is, in the present embodiment, the estimated total power demand is corrected at a frequency of once every 30 minutes.

Further, as shown in FIG. 4, each of the unit terms for correction is divided into 30 segment periods including the 1st segment period to the 30th segment period, each lasting for one minute. That is, each unit term for correction is formed of consecutive 30 segment periods.

As shown in FIG. 4, in one minute as the 1 st segment period, the power demand estimation unit 204 of the power management apparatus 200 first obtains the estimated total power demand with respect to the 1 st segment period. Then, the power control unit 205 implements the charge/discharge control based on the estimated total power demand obtained with respect to the 1 st segment period.

Further, the error measuring unit 202 determines an error between the estimated total power demand obtained with respect to the 1 st segment period and the actual value (actual value obtained with respect to the 1 st segment period) of the total power demand obtained with respect to the same 1 st segment period (i.e., error in the 1st segment period).

The error addition unit 203 designate the error in the 1 st segment period as an integrated error in the 1 st segment period.

Then, in one minute as the 2nd segment period subsequent to the 1 st segment period, the power demand estimation unit 204 obtains the estimated total power demand with respect to the 2nd segment period. Then, the power control unit 205 implements the charge/discharge control based on the estimated total power demand obtained with respect to the 2nd segment period.

Further, the error measuring unit 202 determines an error between the estimated total power demand obtained with respect to the 2nd segment period and the actual value obtained with respect to the same 2nd segment period (i.e., error in the 2nd segment period).

The error addition unit 203 obtains an integrated error with respect to the 2nd segment period by integrating the error in the 2nd segment period with the error in the 1 st segment period.

Thereafter, the estimation to obtain the estimated total power demand, the charge/discharge control of the storage battery 103, the error measurement and the calculation of the integrated error are likewise performed in each of the 3rd to 29th segment periods.

Then, in the last 30th section period in one unit term for correction, the power demand estimation unit 204 obtains the estimated total power demand with respect to the 30th segment period. Furthermore, the power demand estimation unit 204 corrects the error in the estimated total power demand obtained with respect to the 30th segment period, based on the integrated error in the 29th segment period.

Then, the power control unit 205 implements the charge/discharge control, based on the corrected estimated total power demand obtained with respect to the 30th segment period.

Further, the power management apparatus 200 also performs the aforementioned processing from the 1st to the 30th segment periods also in the subsequent 2nd to 48th unit terms for correction.

Thus, in the present embodiment, in the course of repeating the estimation to obtain the estimated total power demand, for example, every minute and the charge/discharge control based on the estimated total power demand, the correction of the estimated total power demand is performed once every 30 minutes. In the correction of the estimated total power demand, the errors obtained every minute are integrated over 29 minutes. Then, using the integrated error obtained by integration of errors obtained over 29 minutes as a correction amount, the estimated total power demand obtained in the next one minute is corrected.

The length of the unit term for correction is not limited to 30 minutes; however, in the present embodiment, the unit term for correction in this instance is set to 30 minutes for the reason as follows.

The power managed area 1 in the present embodiment has a supply contract called a "demand contract" with a power company. In the demand contract, for example, the maximum value (demand) of the total power demand that occurs in one year is set as contract power. The basic fee for the electricity charge is set in accordance with the contract power.

If the power demand in the power managed area 1 exceeds the contract power, a customer in the power managed area 1 is obliged to pay penalties to the power company, and the contract is reset to increase the contract power from the next month in accordance with the excess power, thereby increasing the basic charge as well. Once the basic charge is set, the contract power cannot be lowered for a certain period, for example, one year.

However, the demand, which is a determinant of the contract power, is expressed in terms of an average of the power demand values per 30 minutes measured by a measuring instrument. That is, the contract power is determined according to the maximum value of the average of the power demand values measured per 30 minutes in the past year. In other words, for example, even if the power demand temporarily exceeds the contract power in a certain 30-minute period, the contract power will not be reset to increase unless the average of the power demand values in the same 30-minute period exceeds the contract power.

From this viewpoint, when the power management apparatus 200 performs the charging/discharging control of the storage battery 103 based on the estimated total power demand, correcting the estimated power demand per a period shorter than 30 minutes to prevent even a temporary excess of the contract power by power demand can be said as an excessive control. This means that the power management apparatus 200 in this instance is caused to perform processing of higher load than necessary.

Therefore, in the present embodiment, in view of the demand in the demand contract being the average of power values per 30 minutes, the estimated power demand is corrected every 30 minutes.

Further, in the explanation of FIG. 4, the time length of the segment period in one unit term for correction is set to 1 minute, but the present invention is not limited thereto and the time length may be changed as appropriate.

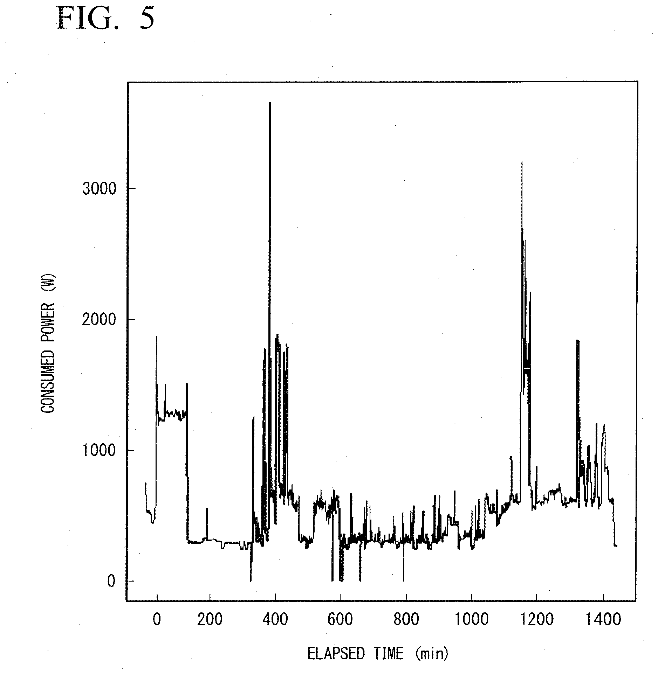

FIG. 5 shows an example of fluctuation of power consumption according to the lapse of time at a certain customer facility 10 in one day (24 hours). The power consumption here is the power demanded by the customer facility 10. Although the power demand for one customer facility 10 is discussed here for the sake of simplifying the explanation, the same applies to the total power demand in that the total power demand also fluctuates with a certain pattern within a day.

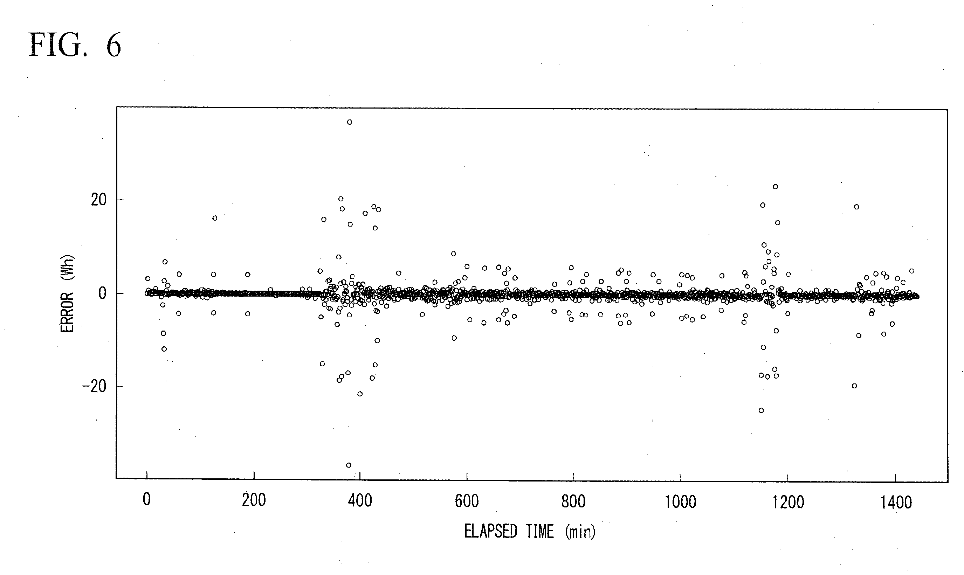

FIG. 6 shows errors between estimated power demand values (estimated power demand) and actual power demand values in one customer facility, which correspond to the fluctuation of the power demand in one day shown in FIG. 5. For example, when the measured value of the power demand at a certain point in time is 1 kW and the estimated power demand is 400 W, the power demand is -600 W (= 400 W - 1000 W), and there is a power shortage of 600 W against the actual power demand. The error occurs when the power shortage of 600 W against the actual power demand as described above lasts for 1 minute (60 seconds) can be obtained as a power amount as follows: -10 Wh = (-600 W × (1/60)). FIG. 6 shows such an error occurring every minute.

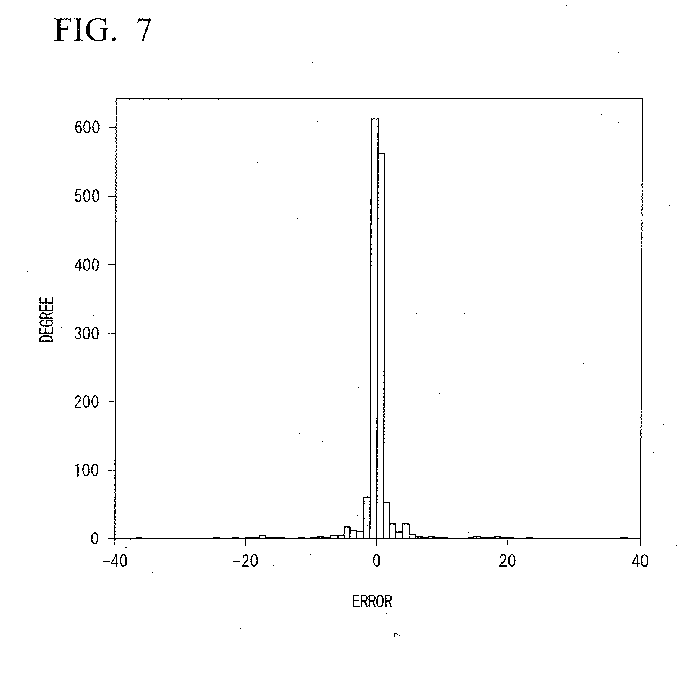

Further, FIG. 7 shows the errors shown in FIG. 6 as a histogram.

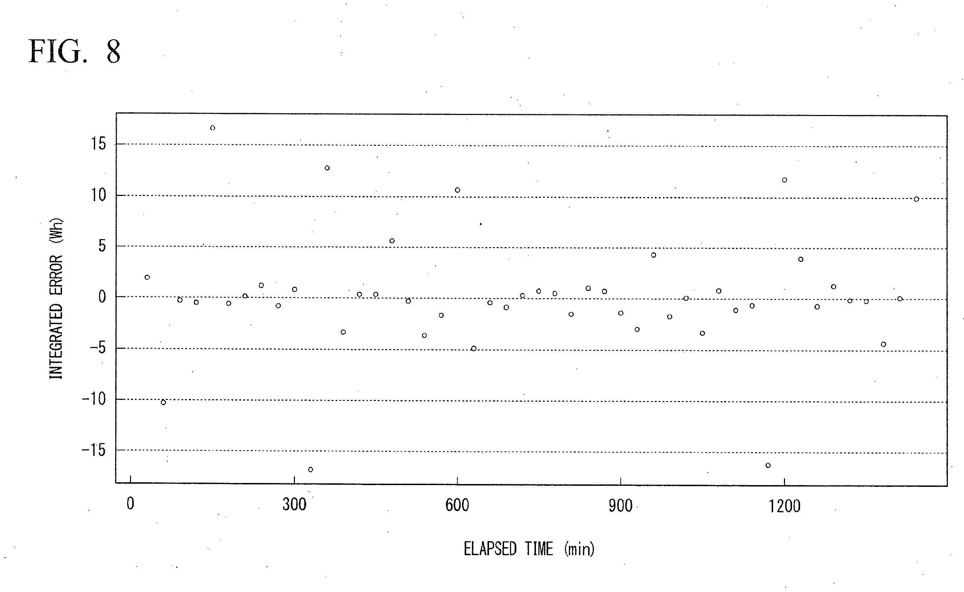

FIG. 8 shows values (integrated errors) obtained by integrating the errors observed per minute shown in FIG. 6 with respect each 30-minute section. For example, as apparent from the comparison between FIG. 8 with FIG. 6, each of the integrated errors shown in FIG. 8 is a value obtained by integrating errors of both positive and negative values and, hence, the deviation from the estimated value is small as compared to the case of FIG. 6.

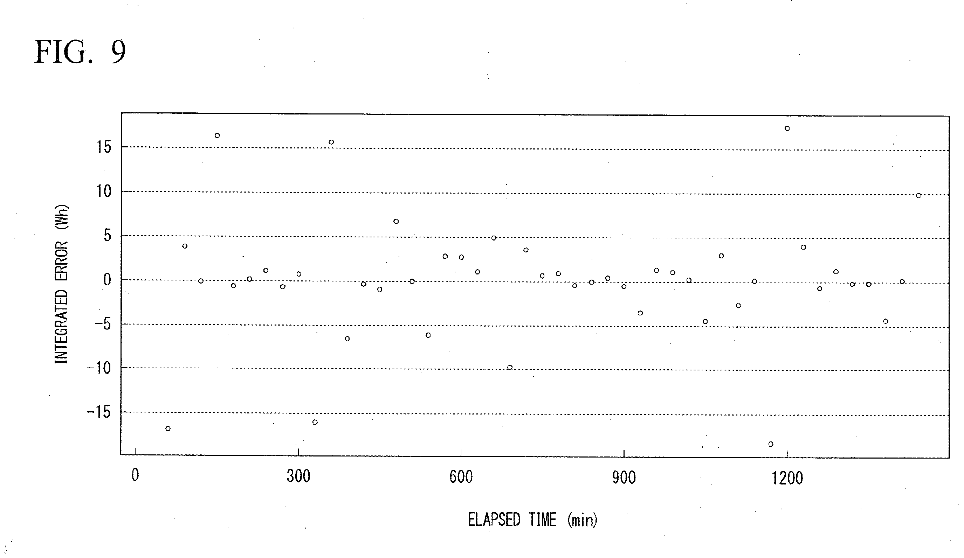

Further, FIG. 9 shows values obtained by following the processing shown in FIG. 4 so as to integrate the errors observed per minute shown in FIG. 6 over 29 minutes that correspond to the 1 st to 29th segment periods in a 30-minute unit term for correction.

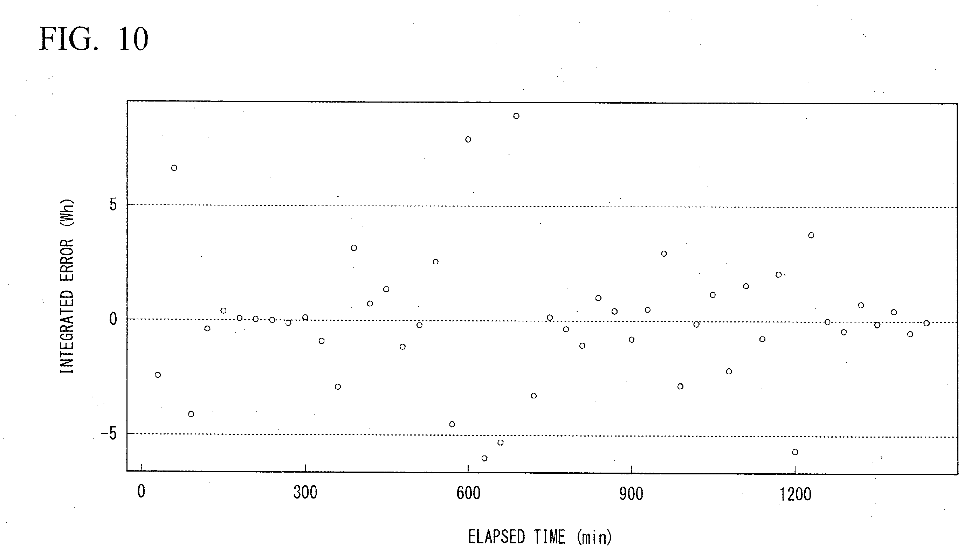

FIG. 10 shows values obtained by following the processing shown in FIG. 4 so as to integrate the errors observed per 30 minutes as a unit term for correction in the case where the estimated power demand in the 30th segment period is corrected based on the integrated error value shown in FIG. 9 that is obtained by integrating the errors observed per minute over 29 minutes.

Here, as apparent from the comparison between FIG. 10 with FIG. 8, the integrated errors shown in FIG. 8 are small as compared to the integrated errors obtained at the corresponding times in FIG. 8. That is, in this case, an improvement is made such that, by correcting the estimated power demand once for each unit term for correction, the error of the result of the power demand estimation is suppressed over the entire period including a plurality of consecutive unit terms for correction, for example, one day.

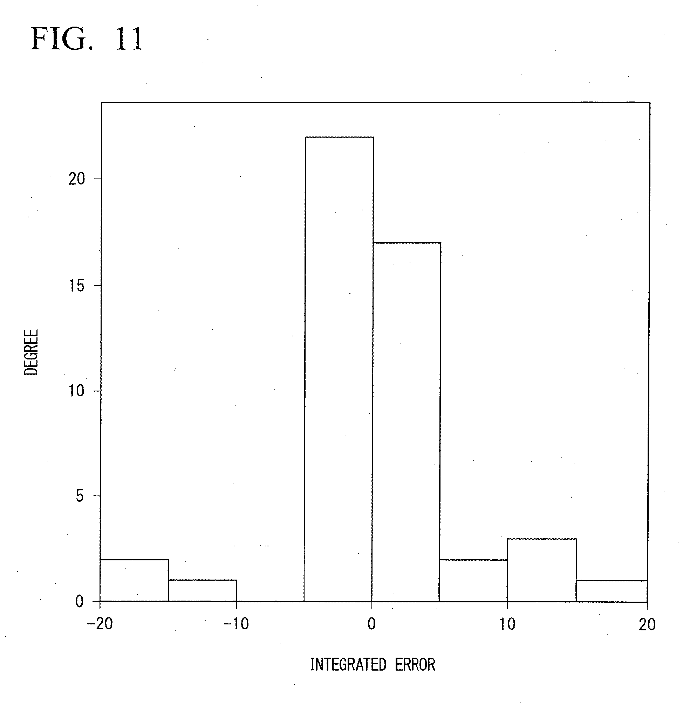

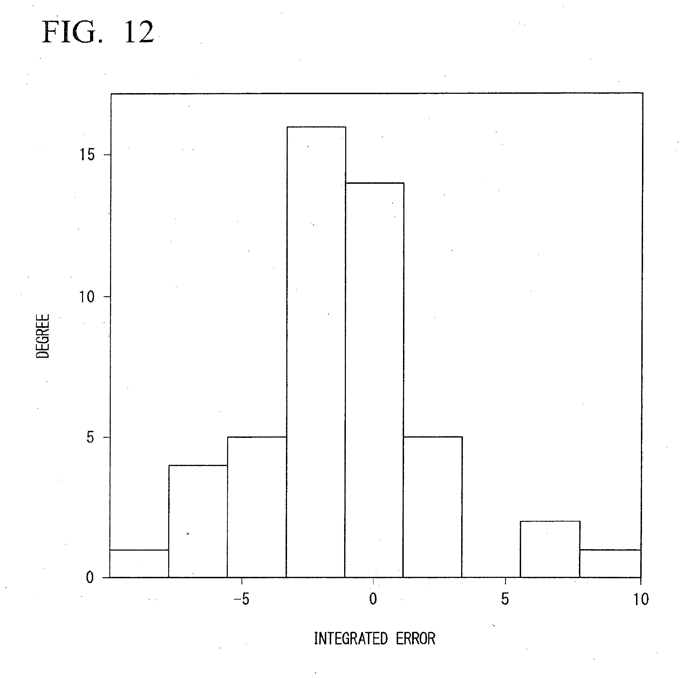

Further, FIG. 11 is a histogram of the integrated errors shown in FIG. 8. FIG. 12 is a histogram of the integrated errors shown in FIG. 10. As apparent from the comparison between FIG. 11 and FIG. 12, the variations in integrated errors are more equalized in FIG. 12. That is, the comparison between FIG. 11 and FIG. 12 also indicates an improvement that, by correcting the estimated power demand once for each unit term for correction, the error of the result of the power demand estimation is suppressed.

In the above explanations with reference to FIG. 5 to FIG. 12, the case of correcting the estimated power demand once every 30 minutes for one customer facility 10 is taken as an example. However, the above explanations with reference to FIG. 5 to FIG. 12 can be likewise applied to the case of correcting the estimated total power demand with respect to a plurality of customer facilities 10 in the power managed area 1 shown in FIG. 1.

Then, the power control unit 205 in the present embodiment performs the charging/discharging control of the storage battery 103 in the power managed area 1, based on the estimated total power demand which is estimated by the power demand estimation unit 204 every one minute and corrected once every 30 minutes.

The algorithm for the charging/discharging control by the power control unit 205 is not particularly limited.

The power control unit 205 sequentially monitors the state of charge (SOC) of each storage battery 103 in the power managed area 1 and the power generated by each photovoltaic module 101 in the power managed area 1.

When the estimated total power demand can be covered by the power generated by the photovoltaic modules 101 in the power managed area 1, the power control unit 205 performs a control such that the power generated by the photovoltaic modules 101 is distributed to the loads 106 of the customer facilities 10. At this time, if a surplus occurs in the generated power, the power control unit 205 selects a storage battery 103 to be charged with a surplus generated power out of the storage batteries 103 in the power managed area 1, and performs a control such that the surplus generated power is charged to the selected storage battery 103.

When the estimated total power demand cannot be covered by the power generated by the photovoltaic modules 101 in the power managed area 1 and the total power stored by the storage batteries 103, the power control unit 205 can perform the power control as follows. That is, the power control unit 205 can perform a control such that the loads 106 of the customer facilities 10 are supplied with the power from the system power supply 2 as well as the power generated by the photovoltaic modules 101 and the power discharged from the storage batteries 103.

Further, for performing the power control as described above, the power control unit 205 may perform the power control in consideration of the electricity charge, for example, in the case where the electricity charge is set to vary depending on the time periods in one day. For example, the power control unit 205 can perform a control such that, in the midnight time period where the electricity charge is low, the power supplied from the commercial power source 2 is charged to the storage battery 103 with a low SOC, or supplied to a water heater or the like included in the load 106 so as to boil the water.

### [Examples of Procedure for Processing]

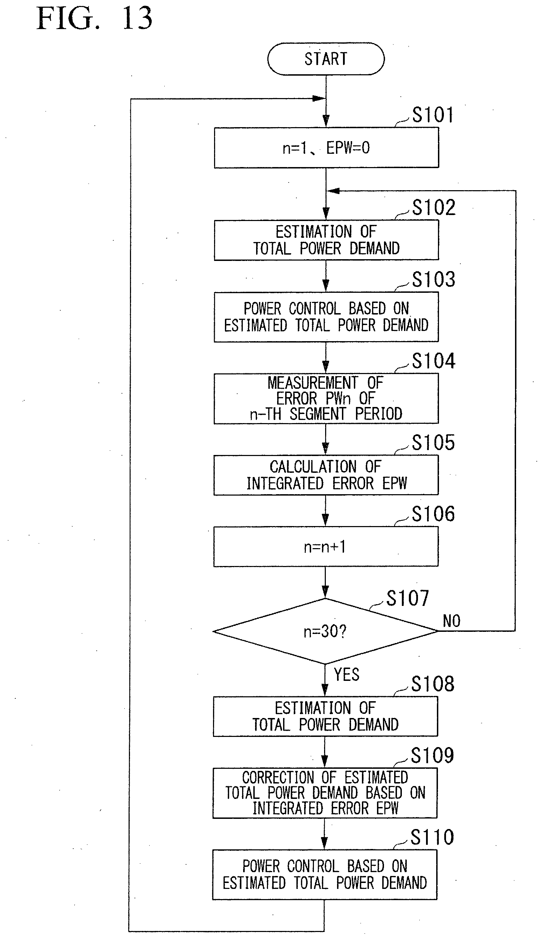

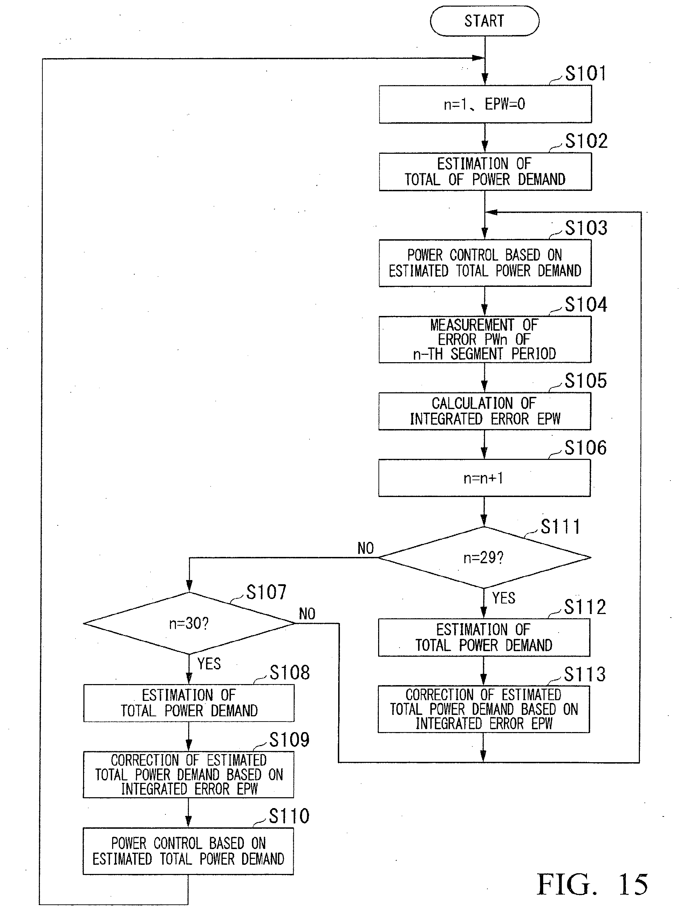

Next, with reference to the flowchart of FIG. 13, explanations are made on an example of procedure that the power management apparatus 200 in the present embodiment follows to execute the processing shown in FIG. 4. FIG. 13 shows the processing executed by the power management apparatus 200 with respect to one unit term for correction. The power management apparatus 200 repeatedly executes the processing shown in FIG. 15 with respect to each unit term for correction.

In the power management apparatus 200, in response to the start of one unit term for correction, the power demand estimation unit 204 substitutes "1" as an initial value for the variable n corresponding to the number assigned to the segment period, and substitute "0" as an initial value for the integrated error EPW (step S101).

The power demand estimation unit 204 obtains the estimated total power demand with respect to the n-th segment period (step S102).

Then, the power control unit 205 implements the power control, based on the estimated total power demand obtained in step S102 with respect to the n-th segment period (step S103).

Further, the error measuring unit 202 measures the error PWn with respect to the n-th segment period (step S104). The error measuring unit 202 can measure the error PWn by, for example, obtaining a difference between the estimated total power demand with respect to the n-th segment period obtained in step S102 and the actual value of the total power demand at a present time.

Next, the error addition unit 203 calculates an integrated error EPW with respect to the n-th segment period using the error PWn with respect to the n-th segment period measured in step S103 (step S105). Specifically, the error addition unit 203 calculates the integrated error EPW with respect to the n-th segment period by adding the error PWn to the integrated error EPW obtained with respect to the (n-1)-th segment period.

Then, the power demand estimation unit 204 increments the variable n (step S106) and judges whether or not the variable n is larger than 30 (step S107).

When the variable n is equal to or less than 30 (NO in step S107), an unprocessed segment period remains in the current unit term for correction. Therefore, the power demand estimation unit 204 in this case returns the process to step S102. As a result, the processes after step S102 with respect to the next segment period are performed.

On the other hand, if the variable n is judged to be greater than 30 (YES in step S107), the next segment period is the 30th segment period. Here, in the 30th segment period, the power demand estimation unit 204 obtains the estimated total power demand with respect to the 30th segment period (step S108).

Next, the power demand estimation unit 204 corrects the estimated total power demand with respect to the 30th segment period obtained in step S108, based on the integrated error EPW obtained in the current stage (step S109).

Then, the power control unit 205 implements the power control, based on the corrected estimated total power demand obtained in step S109 with respect to the 30th segment period (step S110).

As described above, in the present embodiment, the total of the estimated power demand values in the entire power managed area 1 (estimated total power demand) is corrected. On the other hand, the charging and discharging are individually performed with respect to the storage batteries 103 installed in the customer facilities 10 in the power managed area 1.

Therefore, the power management apparatus 200 of the present embodiment determines which of the storage batteries 103 in the power managed area 1 should be charged and discharged, and performs a power control so as to charge or discharge the determined storage battery 103.

There is no particular limitation on the method of determining the storage battery 103 to be charged and discharged. As an example, the power management apparatus 200 can determine the storage batteries 103 to be charged and discharged in the order of priority given in advance to the storage batteries 103. Alternatively, the power management apparatus 200 may determine the storage battery 103 to be discharged in the descending order of the SOC values (i.e., the remaining capacities) of the storage batteries 103, and determine the storage battery 103 to be charged in the ascending order of the SOC values. It is preferable to select the storage batteries 103 such that all storage batteries 103 are subjected to charging and discharging as evenly as possible.

The power control targeting the storage batteries 103 is performed by the control unit 107 provided in each customer facility 10, based on the power control signal output from the power control unit 205 in the power management apparatus 200.

### <Second embodiment>

### [Example of Outline of Operation of Power Management Apparatus]

Next, explanations are made with respect to the second embodiment of the present invention.

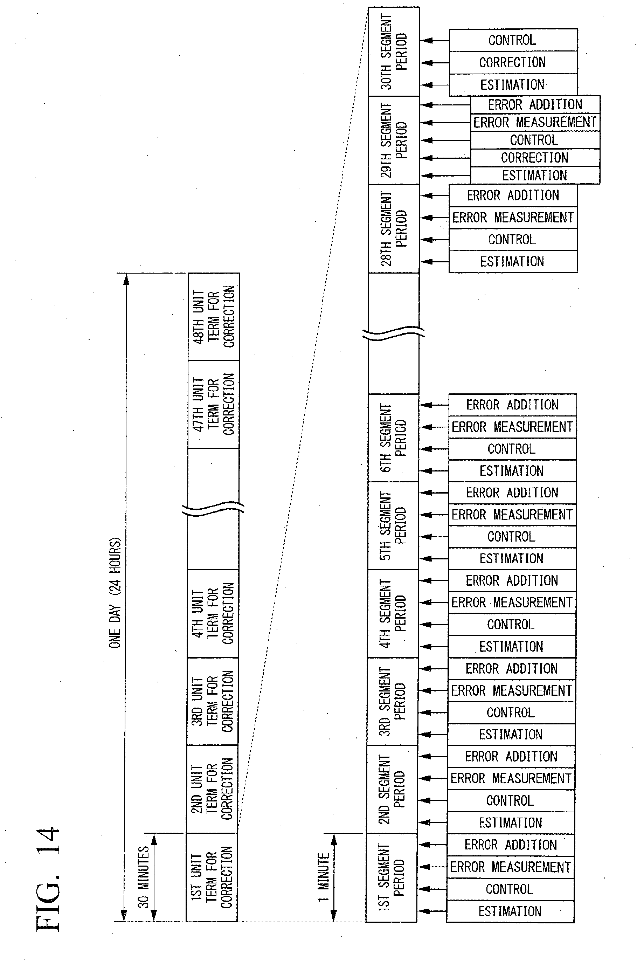

Referring to FIG. 14, explanations are made below on an example of outline of operation of a power management apparatus 200 in the present embodiment for acquiring the estimated total power demand and correcting the estimated total power demand. This second embodiment is the same as the first embodiment in that one day (24 hours) is divided into 48 unit terms for correction, each lasting for 30 minutes.

In FIG. 14, the estimation to obtain the estimated total power demand, the power control in the power managed area 1, the measurement of error in the estimated total power demand and the calculation of the integration error are performed with respect to the 1 st to 28th segments out of the 1 st to 30th segment periods constituting one unit term for correction.

Then, in each of the last two segment periods, i.e., the 29th segment period and the 30th segment period, out of the 1st segment period to the 30th segment period, the estimated total power demand is corrected.

Here, in the 29th segment period, which is the 1st segment period subjected to correction of the estimated total power demand, the power demand estimation unit 204 first obtains the estimated total power demand with respect to the 29th segment period. Then, the power demand estimation unit 204 corrects the estimated total power demand obtained with respect to the 29th segment period, based on the integrated error obtained in the 28th segment period.

Then, the power control unit 205 implements the power control, based on the thus corrected estimated total power demand with respect to the 29th segment period.

Subsequently, in the 29th segment period, the error measuring unit 202 measures the error in the corrected estimated total power demand with respect to the 29th segment period. Then, the error addition unit 203 obtains an integrated error with respect to the 29th segment period by adding the thus obtained error to the error in the 28th segment period.

When the 29th segment period ends and the 30th segment period begins, the power demand estimation unit 204 in the power control unit 205 first obtains the estimated total power demand with respect to the 30th segment period. Then, the power demand estimation unit 204 measures an error in the estimated total power demand obtained with respect to the 30th segment period, based on the integrated error obtained in the 29th segment period. Then, the power control unit 205 implements the power control, based on the thus corrected estimated total power demand with respect to the 30th segment period.

In the case where the error is considerably large, the control value for power control based on the estimated total power demand after correction may exceed a threshold value, i.e., the upper limit or the lower limit, even if the estimated total power demand is corrected. In such a case, repeating the correction two or more times with respect to a plurality of the segment periods as in the present embodiment can increase the possibility that the control value is finally settle within the limited range even if the error is large. As a result, more reliable power control can be expected to be realized.

### [Examples of Procedure for Processing]

Next, with reference to the flowchart of FIG. 15, explanations are made on an example of procedure that the power management apparatus 200 in the present embodiment follows to execute the processing shown in FIG. 14. FIG. 15 shows the processing executed by the power management apparatus 200 with respect to one unit term for correction. The power management apparatus 200 repeatedly executes the processing shown in FIG. 15 with respect to each unit term for correction.

In Fig. 15, the same process steps as in Fig. 13 are designated by the same reference numerals as in Fig. 13, and explanations thereof are omitted.

In the process shown in FIG. 15, steps S111 to S 113 are added to the processes of steps S101 to S110 shown in FIG. 13. The processes of steps S111 to S113 are as follows.

When the variable n is incremented in step S106, the power demand estimation unit 204 determines whether or not the variable n is 29 (step S111).

When the variable n is determined to be 29 (YES in step S111), the power demand estimation unit 204 obtains the estimated total power demand with respect to the 29th segment period (step S 112).

Next, the power demand estimation unit 204 corrects the estimated total power demand obtained with respect to the 29th segment period, based on the integrated error EPW in the final step S105 with respect to the 28th segment period (step S113).

Upon completion of the processing in step S 113, the power demand estimation unit 204 performs the power control based on the estimated total power demand with respect to the 29th segment period corrected in step S 112 by returning the processing to step S103. Subsequently, the error measuring unit 202 measures an error PWn (n = 29) with respect to the 29th segment period (step S112) and increments the variable n (n = 29) (step S113).

As described above, as the variable n (n = 29) is incremented, the variable n becomes 30. In this case, it is determined in step S111 that the variable n is not 29. Thus, when it is determined that the variable n is not 29, the power demand estimation unit 204 further determines in step S107 whether the variable n is 30 or not.

In this case, since the variable n is 30, a positive determination result is obtained in step S107. Then, the power demand estimation unit 204 obtains the estimated total power demand with respect to the 30th segment period in step S108.

Next, in step S109, the power demand estimation unit 204 corrects the estimated total power demand with respect to the 30th segment period obtained in step S108, based on the integrated error EPW obtained in the final step S105.

Then, in step S110, the power control unit 205 implements the power control in the power managed area 1, based on the estimated total power demand corrected in step S109.

### <Modified Embodiment>

Next, explanations are made on a modified version of the present embodiment.

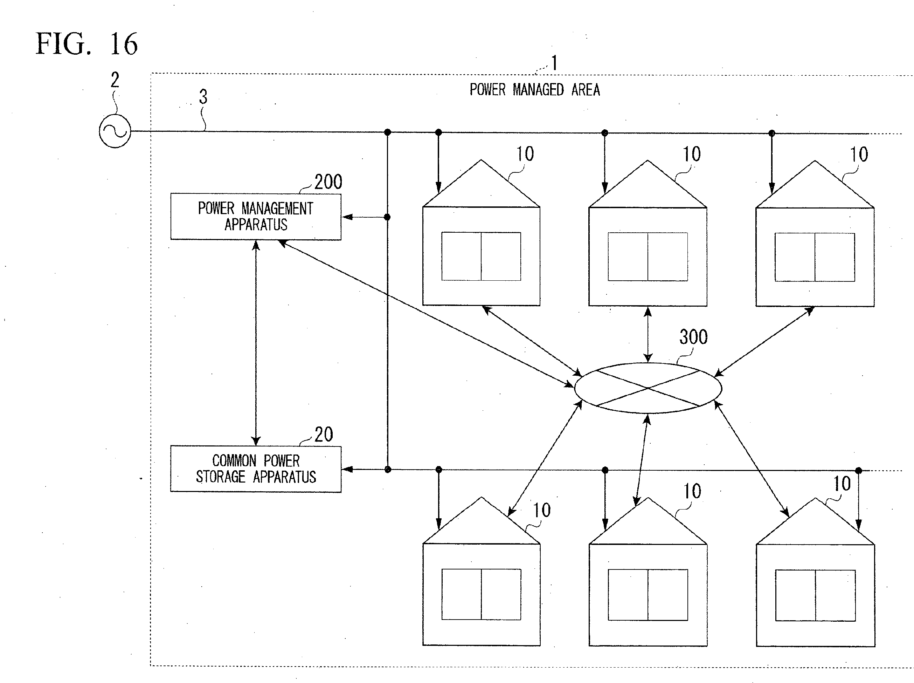

FIG. 16 shows an example of configuration of a modified version of the power management system on the whole. In Fig. 16, the same parts as in Fig. 1 are designated by the same reference numerals as in Fig. 1.

The power management system shown in FIG. 16 is equipped with a common power storage apparatus 20. The common power storage apparatus 20 is a power storage apparatus commonly provided with respect to the customer facilities 10 in the power management system, and is connected to the system power supply 3 common to the customer facilities 10.

The power control unit 205 in the power management apparatus 200 of the present embodiment can perform the power control using the common power storage apparatus 20 as described below.

For example, in the case where the power meeting the estimated total power demand can be covered by the power generated by the photovoltaic modules 101 in the power managed area 1, a surplus in generated power may occur even if the surplus generated power is charged to the storage batteries 103. In such a case, the power control unit 205 performs control so as to cause the remaining surplus generated power to be charged to the common power storage apparatus 20. This enables the modified version of the present embodiment to store the remaining surplus generated power as power available in the power managed area 1 without wasting such surplus generated power.

In the case where the power meeting the estimated total power demand cannot be covered by the power generated by the photovoltaic modules 101 and the total stored power of the storage batteries 103 in the power managed area 1, the power control unit 205 can perform the power control using the common power storage apparatus 20 as follows. That is, the power control unit 205 performs the power control so as to cover the estimated total power demand by the power discharged from the common power storage apparatus 20 in addition to the power generated by the photovoltaic modules 101 and the power discharged from the storage batteries 103.

Further, in the first embodiment, the charging or discharging of the common power storage apparatus 20 may be controlled as a power control based on the estimated total power demand corrected in the 30th segment period.

Such a power control can realize an appropriate control with one correction with respect to one unit term for correction even when the control value for power control based on the corrected estimated total power demand exceeds the range that can be covered by the storage batteries 103 in the power managed area 1.

That is, in this modified version of the present embodiment, the storage battery 103 is caused to execute an operation corresponding to the estimated power demand at each customer facility 10 irrespective of the correction. On the other hand, the common power storage apparatus 20 can be assigned a function to perform a power control according to the control value for the power control based on the corrected estimated total power demand. In this case, with respect to the common power storage apparatus 20, the capacity thereof may be set such that charging and discharging can be performed by a power control according to an excess in the control value.

In the explanations made so far, the error addition unit 203 obtains the added error as the integration error by adding errors of the estimated total power demand values measured with respect to the respective segment periods before correcting the estimated total power demand in the unit term for correction.

However, for example, the error addition unit 203 may be configured to store the errors of the estimated total power demand values measured with respect to the segment periods without adding the errors, and to add up the stored errors to obtain an added error at the time of correcting the estimated total power demand.

In the explanations made so far, the time period subjected to the estimation of total power demand at a present time is taken as the directly subsequent one minute. However, the time period subjected to the estimation of total power demand is not particularly limited with respect to the elapsed time from the present time and the time length. As an example, the time period subjected to the estimation of total power demand may be a period of two minutes which begins at 10 minutes after the present time.

The configuration of the present embodiment can also be applied to HEMS (Home Energy Management System) that performs power control for one customer facility.

In the present invention, the functions of the aforementioned power management apparatus 200 can be performed by a method in which a program for executing the functions is recorded in a computer-readable recording medium, and the program recorded in this medium is loaded into the computer system and executed, so as to allow the power management apparatus 200 to perform the operations as mentioned above. Here, "the program recorded in this medium is loaded into the computer system and executed" encompasses installing a program in a computer system. Herein, the "computer system" may embrace the operating system (OS) and the hardware such as peripheral devices. Further, the "computer system" may include a plurality of computer devices connected via a network including a communication line such as the Internet, WAN, LAN, a dedicated line, or the like. The "computer-readable recording medium" may encompass flexible disks, magneto-optic disks, ROM, portable media such as CD-ROM, and other storage devices such as hard-disk units installed in computers. Thus, the recording medium storing the program may be a non-transitory recording medium such as a CD-ROM. The recording medium also includes a recording medium that is provided internally or externally while being accessible from a distribution server for distributing the program. The code of the program stored in the recording medium of the distribution server may be different from the code of a program written in a format executable by the terminal device. That is, the code of the program stored in the recording medium of the distribution server may be in any format as long as the program downloaded from the distribution server can be installed in an executable form in the terminal device. Further, the program may be divided into segments, which are downloaded at different timings and combined in the terminal device, where the segments of the program may be distributed from different distribution servers. Additionally, the "computer-readable recording medium" may encompass storage means, which are able to retain programs for a certain period of time, such as internal volatile memory (RAM) of computer systems acting as servers or clients when the programs are transmitted through networks. Further, the above program may be for executing a part of the above-described functions. Furthermore, the program may be the so-called "difference file" (difference program) that can execute the above-described functions in cooperation with a program already recorded in the computer system.

Various embodiments of the present invention are explained above referring to the drawings; however, the specific configuration is not limited to those of the embodiments and may be altered as long as the alterations do not deviate from the gist of the present invention.

### DESCRIPTION OF THE REFERENCE SYMBOLS

- 1: Power managed area
- 2: Commercial power source
- 3: System power supply
- 10: Customer facility
- 20: Common power storage apparatus
- 101: Photovoltaic module
- 102: Power conditioning system
- 103: Storage battery
- 104: Inverter
- 105: Power line switch
- 106: Load
- 107: Control unit provided per facility
- 200: Power management apparatus
- 201: Network interface unit
- 202: Error measuring unit
- 203: Error addition unit
- 204: Power demand estimation unit
- 205: Power control unit
- 300: Network

## Claims

1. A power demand estimation apparatus, comprising:
an error measuring unit configured to measure an error of estimated power demand estimated with respect to one or more customer facilities;
an error addition unit configured to obtain an added error obtained by adding errors measured with respect to segment periods in a unit term for correction, the unit term for correction including a predetermined number of consecutive series of segment periods; and
a power demand estimation unit configured to estimate power demand values with respect to the respective segment periods, and correct the estimated power demand value estimated with respect to last predetermined number of segment period in the unit term for correction, based on an added error obtained with respect to the segment periods preceding the last predetermined number of segment period in the unit term for correction.

2. The power demand estimation method according to claim 1, wherein the error addition unit obtains the added error as an integrated error by integrating the errors measured with respect to the respective segment periods.

3. The power demand estimation apparatus according to claim 1 or 2, wherein the power demand estimation unit corrects the estimated power demand value estimated with respect to last one segment period in the unit term for correction, based on an added error obtained with respect to the segment periods preceding the last one segment period in the unit term for correction.

4. The power demand estimation apparatus according to any one of claims 1 to 3, wherein the power demand estimation unit corrects the estimated power demand values estimated with respect to last two or more segment periods in the unit term for correction, based on an added error obtained with respect to the segment periods preceding the last two or more segment periods in the unit term for correction.

5. A power demand estimation method, comprising: an error measuring step of measuring an error of estimated power demand estimated with respect to one or more customer facilities;
an error addition step of obtaining an added error obtained by adding errors measured with respect to segment periods in a unit term for correction, the unit term for correction including a predetermined number of consecutive series of segment periods; and
a power demand estimation step of estimating power demand values with respect to the respective segment periods, and correcting the estimated power demand value estimated with respect to last predetermined number of segment period in the unit term for correction, based on an added error obtained with respect to the segment periods preceding the last predetermined number of segment period in the unit term for correction.

6. The power demand estimation method according to claim 5, wherein, in the error addition step, the added error is obtained as an integrated error by integrating the errors measured with respect to the respective segment periods.

7. A power demand estimation program for causing a computer to execute:
an error measuring step of measuring an error of estimated power demand estimated with respect to one or more customer facilities;
an error addition step of obtaining an added error obtained by adding errors measured with respect to segment periods in a unit term for correction, the unit term for correction including a predetermined number of consecutive series of segment periods; and
a power demand estimation step of estimating power demand values with respect to the respective segment periods, and correcting the estimated power demand value estimated with respect to last predetermined number of segment period in the unit term for correction, based on an added error obtained with respect to the segment periods preceding the last predetermined number of segment periods in the unit term for correction.

8. The power demand estimation program according to claim 7, wherein, in the error addition step, the added error is obtained as an integrated error by integrating the errors measured with respect to the respective segment periods.
